# EUROPÄISCHE PATENTSCHRIFT

(11) **EP 2 470 806 B1**
(45) Veröffentlichungstag und Bekanntmachung des Hinweises auf die Patenterteilung: **21.05.2014**
(21) Anmeldenummer: 10743108.2
(22) Anmeldetag: 12.08.2010
(51) Int. Cl.: F16C 35/04

(54) **LAGERANORDNUNG**
BEARING ARRANGEMENT
ARRANGEMENT DE PALIER

(30) Priorität: 24.08.2009 EP 09010801
(43) Veröffentlichungstag der Anmeldung: 04.07.2012
(73) Patentinhaber: Aktiebolaget SKF, 41 550 Göteborg (SE)
(72) Erfinder: BEYFUSS, Berthold, 97535 Kaisten (DE); DILJE, Alexander, 97422 Schweinfurt (DE); HAUCK, Helmut, 97502 Euerbach (DE); RADINA, Alfred, 97711 Poppenlauer (DE); SCHARNBERGER, Peter, 97247 Eisenheim (DE); SEUFERT, Stefanie, 97711 Rothhausen (DE); THEUERER, Jürgen, 97509 Kolitzheim (DE)
(74) Vertreter: Schonecke, Mitja
(86) Internationale Anmeldenummer: PCT/EP2010/061715
(87) Internationale Veröffentlichungsnummer: WO 2011/023559

(56) Entgegenhaltungen:
- EP-A2- 1 503 096
- DE-A1- 10 137 296
- US-A- 2 560 413
- US-A- 4 412 705

## Beschreibung

Die Erfindung betrifft eine Lageranordnung, die einen Lagerträger umfasst, wobei der Lagerträger mindestens eine Aufnahme für ein Lager, insbesondere für ein Wälzlager, aufweist, wobei der Lagerträger mindestens einen Befestigungsabschnitt aufweist, der zur Anlage und Befestigung des Lagerträgers an einem Befestigungsbereich eines weiteren Bauteils, insbesondere eines Gehäuses, vorgesehen ist, und wobei an der dem Befestigungsbereich des weiteren Bauteils zugewandten Seite des Befestigungsabschnitts des Lagerträgers mindestens ein in axiale Richtung vorstehendes Zentrierelement angeordnet ist, das in eine korrespondierende Ausnehmung im Befestigungsbereich des weiteren Bauteils zumindest teilweise eintreten kann.

Lageranordnungen dieser Art sind im Stand der Technik hinlänglich bekannt. Eine gattungsgemäße Anordnung ist aus der EP 1 503 096 A2 und aus der US 4 412 705 A bekannt. Ähnliche Konzepte zeigen die DE 101 37 296 A1 und die US 2 560 413 A. Exemplarisch wird weiter auf die DE 100 07 437 A1 hingewiesen. Hier wird aus einem Blech ein Lagerträger geformt, der eine topfförmige Aufnahme für den Außenring eines Wälzlagers aufweist. Mittels des Lagers wird namentlich im Anwendungsfall eines PKW-Getriebes eine Getriebewelle gelagert. Der Lagerträger selber wird mittels Schrauben an einem Gehäuse befestigt. Der Lagerträger kann damit als Teil der Wandung des Gehäuses fungieren. Da die Formgenauigkeit des Wellensitzes hoch und damit die Position des Lagersitzes präzise sein müssen, wird der Lagerträger entsprechend genau gefertigt. Um die präzise Montage des Lagerträgers am Gehäuse sicherzustellen, sind im Stand der Technik verschiedene Maßnahmen bekannt geworden, die allgemein im Maschinenbau eingesetzt werden, wenn es um die Zentrierung zweier Teile vor deren Verschraubung geht. So ist es beispielsweise möglich, mit Passstiften die präzise Lage des Lagerträgers am Gehäuse zu definieren. Möglich sind auch präzise gefertigte Bundflächen am Lagerträger, die mit korrespondierenden Flächen im Gehäuse zusammenwirken und so den Lagerträger in der genauen gewünschten Lage am Gehäuse fixieren.

Nachteilig sind in diesem Zusammenhang die oft signifikanten Herstellungs- und auch Montagekosten bei der Fertigung und Montage eines Gehäuses unter Einsatz einer gattungsgemäßen Lageranordnung.

Der Erfindung liegt daher die **Aufgabe** zu Grunde, eine Lageranordnung der eingangs genannten Art so fortzubilden, dass es in einfacher und kostengünstiger Weise sowohl hinsichtlich der Fertigung als auch hinsichtlich der Montage möglich ist, den Lagerträger präzise an dem diesen tragenden Bauteil festzulegen. Damit soll in effizienter Weise die Herstellung gattungsgemäßer Lageranordnungen auch in der Großserienfertigung möglich sein.

Die **Lösung** dieser Aufgabe durch die Erfindung ist dadurch gekennzeichnet, dass das mindestens eine Zentrierelement mit einem Verankerungsabschnitt in einer sich in axiale Richtung erstreckende Bohrung im Lagerträger angeordnet ist, wobei das mindestens eine Zentrierelement einen sich in axiale Richtung erstreckenden Zentrierabschnitt aufweist, wobei der Verankerungsabschnitt des Zentrierelements an seinem vom Zentrierabschnitt abgewandten Ende eine Durchmesservergrößerung aufweist, wobei die Bohrung im Lagerträger im Bereich der Durchmesservergrößerung des Verankerungsabschnitts eine korrespondierende Durchmesservergrößerung aufweist, wobei der im Durchmesser vergrößerte Abschnitt des Verankerungsabschnitts mit seiner vom Zentrierabschnitt entfernten Stirnseite mit einer Stirnseite des Befestigungsabschnitts bündig abschließt.

Der Zentrierabschnitt ist dabei bevorzugt zumindest abschnittsweise zylindrisch ausgebildet. Der Außendurchmesser des zylindrischen Teils des Zentrierabschnitts ist bevorzugt größer als der Durchmesser der Bohrung. Der Zentrierabschnitt kann zur Vereinfachung der Einführung desselben in die Ausnehmung im weiteren Bauteil in seinem dem Befestigungsbereich des weiteren Bauteils zugewandten Endbereich mit einer Abschrägung versehen sein, insbesondere mit einer konischen Verjüngung.

Das Zentrierelement kann in die Bohrung im Lagerträger eingesteckt sein und durch Kraftschluss und/oder Formschluss in der Bohrung gehalten werden.

Das Zentrierelement besteht bevorzugt aus Kunststoff.

In diesem Falle kann vorgesehen sein, dass das Zentrierelement durch einen Spritzgießvorgang an den Lagerträger und in die Bohrung an- bzw. eingespritzt ist.

Bevorzugt sind mehrere Zentrierelemente über den Umfang des Lagerträgers angeordnet; besonders bevorzugt ist dabei an zwei, drei oder vier Zentrierelemente über den Umfang des Lagerträgers gedacht.

Der Lagerträger besteht bevorzugt aus einem Blechteil mit im Wesentlichen konstanter Dicke.

Der Lagerträger kann schließlich Durchgangsbohrungen für den Durchtritt von Befestigungsmitteln, insbesondere für den Durchtritt von Schrauben, aufweisen.

Die Erfindung kommt besonders bevorzugt in einem PKW-Getriebe zum Einsatz.

In vorteilhafter Weise lässt sich die vorgeschlagene Ausgestaltung in einer solchen Weise umsetzen, dass nur geringe Modifikationen bei einer bestehenden Fertigung von Lagerträgern erforderlich sind, insbesondere was die Blechbearbeitung anbelangt.

Fertigungstoleranzen können mit der vorgeschlagenen Konzeption in einfacher Weise ausgeglichen werden.

In der Zeichnung ist ein Ausführungsbeispiel der Erfindung dargestellt. Es zeigen:
- Fig. 1: eine teilweise geschnitten dargestellte Seitenansicht eines Lagerträgers mit einem Wälzlager, der an einem Gehäuse eines Getriebes zu befestigen ist; dargestellt ist die Stellung bevor der Lagerträger samt Lager am Gehäuse angelegt ist,
- Fig. 2: die Einzelheit "X" gemäß Fig. 1 und

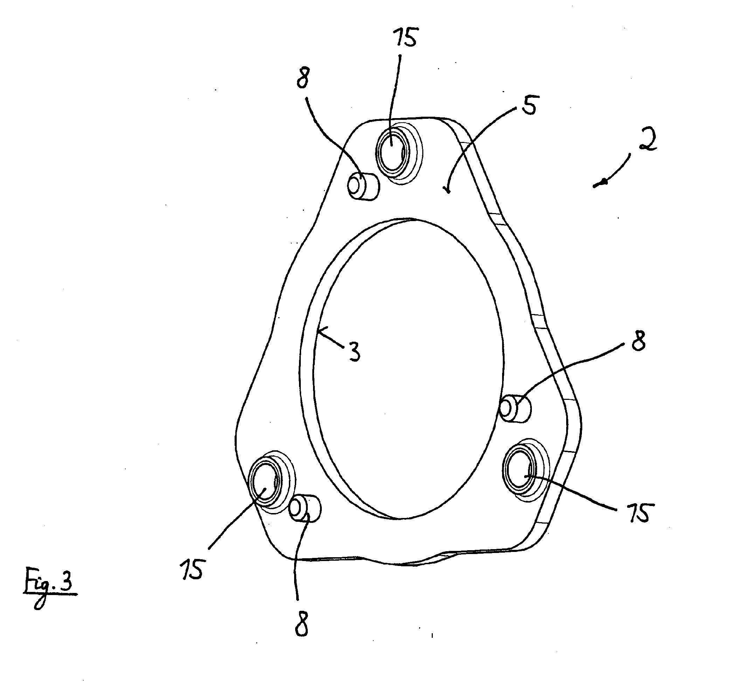

- Fig. 3: in perspektivischer Darstellung den Lagerträger der Lageranordnung.

In den Figuren ist eine Lageranordnung 1 zu sehen, die einen Lagerträger 2 umfasst, der eine kreisrunde Aufnahme 3 für den Außenring eines Wälzlagers 4 hat. Die Befestigung des Lageraußenrings am Lagerträger 2 kann beispielsweise mit Verstemmungen oder in sonstiger Weise erfolgen. Derartige Befestigungsmöglichkeiten sind im Stand der Technik hinlänglich beschrieben, so dass auf diese verwiesen werden kann; exemplarisch sei die eingangs bereits genannte DE 100 07 437 A1 genannt.

Der Lagerträger 2 weist einen Befestigungsabschnitt 5 auf, der eben ausgebildet und dazu bestimmt ist, an einem Befestigungsbereich 6 eines weiteren Bauteils 7 in Form eines Getriebegehäuses angelegt und an diesem befestigt zu werden.

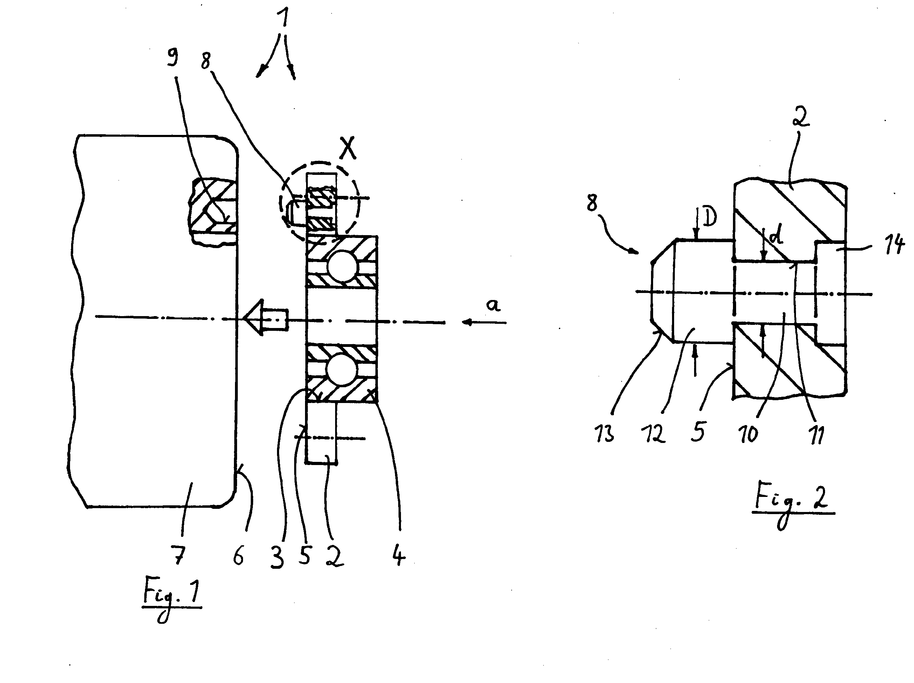

Damit die Festlegung in einfacher und präzise zentrierter Weise erfolgen kann, weist der Lagerträger 2 mehrere, im Ausführungsbeispiel drei, Zentrierelemente 8 auf, deren Aufbau und Anordnung im Lagerträger 2 am besten aus Fig. 2 hervorgeht.

In den Befestigungsbereich 6 des Getriebegehäuses 7 sind eine der Anzahl der Zentrierelemente 8 entsprechende Anzahl Ausnehmungen 9 in Form von Bohrungen eingebracht. Wird - was durch den Pfeil in Fig. 1 angedeutet istder Lagerträger 2 samt montiertem Lager 4 in axiale Richtung a auf das Getriebegehäuse 7 aufgeschoben, gelangen die Zentrierelemente 8 und namentlich deren Zentrierabschnitte 12 in die Ausnehmungen 9, so dass, bevor die Befestigung des Lagerträgers 2 am Getriebegehäuse 7 erfolgt, der Lagerträger 2 samt Lager 4 präzise am Getriebegehäuse 7 zentriert ist.

Anschließend wird in an sich bekannter Weise der Lagerträger 2 mittels Befestigungsschrauben am Getriebegehäuse 7 befestigt, wozu im Lagerträger 2 Durchgangsbohrungen 15 für die Schrauben vorhanden sind.

Details der Ausgestaltung des Zentrierelements 8 und seiner Anordnung im Lagerträger 2 sind aus Fig. 2 ersichtlich. Im Lagerträger 2 sind Bohrungen 11 eingearbeitet. Das Zentrierelement 8 besitzt in seinem vom Zentrierabschnitt 12 abgewandten Bereich einen Verankerungsabschnitt 10. Dabei liegt im Zustand, in dem das Zentrierelement 8 im Lagerträger 2 angeordnet ist, bevorzugt Presspassung zwischen dem zylindrischen Verankerungsabschnitt 10 und der zylindrischen Bohrung 11 vor.

Der Durchmesser d des Verankerungsabschnitts 10 bzw. der Bohrung 11 ist dabei kleiner als der Außendurchmesser D des Zentrierabschnitts 12. Damit hat der Zentrierabschnitt 12 eine definierte Anlage an dem Befestigungsabschnitt 5 des Lagerträgers 2.

Im Ausführungsbeispiel ist vorgesehen, dass der Verankerungsabschnitt 10 in seinem vom Zentrierabschnitt 12 abgewandten Ende eine Durchmesservergrößerung 14 aufweist. Hierdurch kann das Zentrierelement 8 mit Formschluss im Lagerträger 2 gehalten werden, da die Bohrung 11 im Lagerträger 2 im Bereich der Durchmesservergrößerung 14 des Verankerungsabschnitts 10 ebenfalls im Durchmesser vergrößert ist.

Um das Einführen der Zentrierabschnitte 12 in die Ausnehmungen 9 im Getriebegehäuse 7 zu vereinfachen, weisen diese endseitig eine Abschrägung 13 auf.

Die Zentrierelemente 8 sind im einfachsten Falle als separate Formteile, bevorzugt aus Kunststoff, gefertigt. Sie werden dann in die Bohrungen 11 im Lagerträger 2 axial eingeschoben bzw. eingepresst und so im Lagerträger fixiert.

Eine andere Möglichkeit besteht darin, die aus Kunststoff bestehenden Zentrierelemente 8 durch An- bzw. Einspritzen an den Lagerträger 2 bzw. dessen Bohrung 11 am Lagerträger anzubringen.

### Bezueszeichenliste

- 1: Lageranordnung
- 2: Lagerträger
- 3: Aufnahme
- 4: Lager
- 5: Befestigungsabschnitt
- 6: Befestigungsbereich
- 7: weiteres Bauteil (Getriebegehäuse)
- 8: Zentrierelement
- 9: Ausnehmung
- 10: Verankerungsabschnitt
- 11: Bohrung
- 12: Zentrierabschnitt
- 13: Abschrägung (konische Verjüngung)
- 14: Durchmesservergrößerung
- 15: Durchgangsbohrung

- a: axiale Richtung
- D: Außendurchmesser
- d: Durchmesser

## Patentansprüche

1. Lageranordnung (1), die einen Lagerträger (2) umfasst, wobei der Lagerträger (2) mindestens eine Aufnahme (3) für ein Lager (4), insbesondere für ein Wälzlager, aufweist, wobei der Lagerträger (2) mindestens einen Befestigungsabschnitt (5) aufweist, der zur Anlage und Befestigung des Lagerträgers (2) an einem Befestigungsbereich (6) eines weiteren Bauteils (7), insbesondere eines Gehäuses, vorgesehen ist, und wobei an der dem Befestigungsbereich (6) des weiteren Bauteils (7) zugewandten Seite des Befestigungsabschnitts (5) des Lagerträgers (2) mindestens ein in axiale Richtung (a) vorstehendes Zentrierelement (8) angeordnet ist, das in eine korrespondierende Ausnehmung (9) im Befestigungsbereich (6) des weiteren Bauteils (7) zumindest teilweise eintreten kann,
**dadurch gekennzeichnet, dass**
das mindestens eine Zentrierelement (8) mit einem Verankerungsabschnitt (10) in einer sich in axiale Richtung (a) erstreckende Bohrung (11) im Lagerträger (2) angeordnet ist,
wobei das mindestens eine Zentrierelement (8) einen sich in axiale Richtung (a) erstreckenden Zentrierabschnitt (12) aufweist,
wobei der Verankerungsabschnitt (10) des Zentrierelements (8) an seinem vom Zentrierabschnitt (12) abgewandten Ende eine Durchmesservergrößerung (14) aufweist,
wobei die Bohrung (11) im Lagerträger (2) im Bereich der Durchmesservergrößerung (14) des Verankerungsabschnitts (10) eine korrespondierende Durchmesservergrößerung aufweist.

2. Lageranordnung nach Anspruch 1, **dadurch gekennzeichnet, dass** der Zentrierabschnitt (12) zumindest abschnittsweise zylindrisch ausgebildet ist.

3. Lageranordnung nach Anspruch 2, **dadurch gekennzeichnet, dass** der Außendurchmesser (D) des zylindrischen Teils des Zentrierabschnitts (12) größer ist als der Durchmesser (d) der Bohrung (11).

4. Lageranordnung nach einem der Ansprüche 1 bis 3, **dadurch gekennzeichnet, dass** der Zentrierabschnitt (12) in seinem dem Befestigungsbereich (6) des weiteren Bauteils (7) zugewandten Endbereich mit einer Abschrägung (13) versehen ist, insbesondere mit einer konischen Verjüngung.

5. Lageranordnung nach einem der Ansprüche 1 bis 4, **dadurch gekennzeichnet, dass** das Zentrierelement (8) in die Bohrung (11) im Lagerträger (2) eingesteckt ist und durch Kraftschluss und/oder Formschluss in der Bohrung (11) gehalten wird.

6. Lageranordnung nach einem der Ansprüche 1 bis 5, **dadurch gekennzeichnet, dass** das Zentrierelement (8) aus Kunststoff besteht.

7. Lageranordnung nach Anspruch 6, **dadurch gekennzeichnet, dass** das Zentrierelement (8) durch einen Spritzgießvorgang an den Lagerträger (2) und in die Bohrung (11) an- bzw. eingespritzt ist.

8. Lageranordnung nach einem der Ansprüche 1 bis 7, **dadurch gekennzeichnet, dass** mehrere Zentrierelemente (8) über den Umfang des Lagerträgers (2) angeordnet sind.

9. Lageranordnung nach Anspruch 8, **dadurch gekennzeichnet, dass** zwei, drei oder vier Zentrierelemente (8) über den Umfang des Lagerträgers (2) angeordnet sind.

10. Lageranordnung nach einem der Ansprüche 1 bis 9, **dadurch gekennzeichnet, dass** der Lagerträger (2) aus einem Blechteil mit im Wesentlichen konstanter Dicke besteht.

11. Lageranordnung nach einem der Ansprüche 1 bis 10, **dadurch gekennzeichnet, dass** der Lagerträger (2) Durchgangsbohrungen (15) für den Durchtritt von Befestigungsmitteln, insbesondere für den Durchtritt von Schrauben, aufweist.

## Claims

1. Bearing arrangement (1), which comprises a bearing carrier (2), the bearing carrier (2) having at least one receptacle (3) for a bearing (4), in particular for a rolling bearing, the bearing carrier (2) having at least one fastening portion (5) which is intended for bringing to bear and fastening the bearing carrier (2) on a fastening region (6) of a further component (7), in particular of a housing, and there being arranged, on that side of the fastening portion (5) of the bearing carrier (2) which faces the fastening region (6) of the further component (7), at least one centring element (8) which projects in the axial direction (a) and which can penetrate at least partially into a corresponding recess (9) in the fastening region (6) of the further component (7), **characterized in that** the at least one centring element (8) is arranged with an anchoring portion (10) in a bore (11) extending in the axial direction (a) in the bearing carrier (2), the at least one centring element (8) having a centring portion (12) extending in the axial direction (a), the anchoring portion (10) of the centring element (8) having an increase in diameter (14) at its end facing away from the centring portion (12), the bore (11) in the bearing carrier (2) having a corresponding increase in diameter in the region of the increase in diameter (14) of the anchoring portion (10).

2. Bearing arrangement according to Claim 1, **characterized in that** the centring portion (12) is of at least partially cylindrical form.

3. Bearing arrangement according to Claim 2, **characterized in that** the outside diameter (D) of the cylindrical part of the centring portion (12) is larger than the diameter (d) of the bore (11).

4. Bearing arrangement according to one of Claims 1 to 3, **characterized in that** the centring portion (12) is provided, in its end region facing the fastening region (6) of the further component (7), with a slope (13), in particular with a conical taper.

5. Bearing arrangement according to one of Claims 1 to 4, **characterized in that** the centring element (8) is plugged into the bore (11) in the bearing carrier (2) and is held in the bore (11) non-positively and/or positively.

6. Bearing arrangement according to one of Claims 1 to 5, **characterized in that** the centring element (8) consists of plastic.

7. Bearing arrangement according to Claim 6, **characterized in that** the centring element (8) is injected onto the bearing carrier (2) and injected into the bore (11) by means of an injection-moulding operation.

8. Bearing arrangement according to one of Claims 1 to 7, **characterized in that** a plurality of centring elements (8) are arranged over the circumference of the bearing carrier (2).

9. Bearing arrangement according to Claim 8, **characterized in that** two, three or four centring elements (8) are arranged over the circumference of the bearing carrier (2).

10. Bearing arrangement according to one of Claims 1 to 9, **characterized in that** the bearing carrier (2) consists of a sheet metal part having an essentially constant thickness.

11. Bearing arrangement according to one of Claims 1 to 10, **characterized in that** the bearing carrier (2) has through-bores (15) for the passage of fastening means, in particular for the passage of screws.

## Revendications

1. Agencement de palier (1), comprenant un support de palier (2), le support de palier (2) présentant au moins un logement (3) pour un palier (4), en particulier pour un palier à roulement, le support de palier (2) présentant au moins une portion de fixation (5) qui est prévue pour appliquer et fixer le support de palier (2) contre une région de fixation (6) d'un composant supplémentaire (7), en particulier d'un boîtier, et au moins un élément de centrage (8) faisant saillie dans la direction axiale (a) étant disposé au niveau du côté de la portion de fixation (5) du support de palier (2) tourné vers la région de fixation (6) du composant supplémentaire (7), lequel élément de centrage peut pénétrer au moins en partie dans un évidement correspondant (9) dans la région de fixation (6) du composant supplémentaire (7), **caractérisé en ce que**
l'au moins un élément de centrage (8) est disposé avec une portion d'ancrage (10) dans un alésage (11) dans le support de palier (2) s'étendant dans la direction axiale (a),
l'au moins un élément de centrage (8) présentant une portion de centrage (12) s'étendant dans la direction axiale (a),
la portion d'ancrage (10) de l'élément de centrage (8) présentant, au niveau de son extrémité opposée à la portion de centrage (12), une augmentation de diamètre (14),
l'alésage (11) dans le support de palier (2) présentant, dans la région de l'augmentation de diamètre (14) de la portion d'ancrage (10), une augmentation de diamètre correspondante.

2. Agencement de palier selon la revendication 1, **caractérisé en ce que** la portion de centrage (12) est réalisée au moins en partie sous forme cylindrique.

3. Agencement de palier selon la revendication 2, **caractérisé en ce que** le diamètre extérieur (D) de la partie cylindrique de la portion de centrage (12) est supérieur au diamètre (d) de l'alésage (11).

4. Agencement de palier selon l'une quelconque des revendications 1 à 3, **caractérisé en ce que** la portion de centrage (12) est pourvue d'un biseautage (13), notamment d'un rétrécissement conique, dans sa région d'extrémité tournée vers la région de fixation (6) du composant supplémentaire (7).

5. Agencement de palier selon l'une quelconque des revendications 1 à 4, **caractérisé en ce que** l'élément de centrage (8) est enfiché dans l'alésage (11) dans le support de palier (2) et est retenu par engagement par force et/ou par engagement positif dans l'alésage (11).

6. Agencement de palier selon l'une quelconque des revendications 1 à 5, **caractérisé en ce que** l'élément de centrage (8) se compose de plastique.

7. Agencement de palier selon la revendication 6, **caractérisé en ce que** l'élément de centrage (8) est surmoulé ou inséré par injection par une opération de moulage par injection sur le support de palier (2) et dans l'alésage (11).

8. Agencement de palier selon l'une quelconque des revendications 1 à 7, **caractérisé en ce que** plusieurs éléments de centrage (8) sont disposés sur la périphérie du support de palier (2).

9. Agencement de palier selon la revendication 8, **caractérisé en ce que** deux, trois ou quatre éléments de centrage (8) sont disposés sur la périphérie du support de palier (2).

10. Agencement de palier selon l'une quelconque des revendications 1 à 9, **caractérisé en ce que** le support de palier (2) se compose d'une partie en tôle d'épaisseur essentiellement constante.

11. Agencement de palier selon l'une quelconque des revendications 1 à 10, **caractérisé en ce que** le support de palier (2) présente des alésages traversants (15) pour le passage de moyens de fixation, en particulier pour le passage de vis.
